# FASCICULE DE BREVET EUROPEEN

(11) **EP 2 073 108 B1**
(45) Date de publication et mention de la délivrance du brevet: **21.03.2018**
(21) Numéro de dépôt: 07150136.5
(22) Date de dépôt: 19.12.2007
(51) Int. Cl.: G06F 3/044

(54) **Ecran à zones tactiles capacitives**
Touchscreen mit kapazitiven Berührungszonen
Screen with capacitive tactile areas

(43) Date de publication de la demande: 24.06.2009
(73) Titulaire: EM Microelectronic-Marin SA, 2074 Marin (CH)
(72) Inventeur: Hamm, Alain, 2523 Lignières (CH); Grosjacques, Emile, 2072 Saint-Blaise (CH)
(74) Mandataire: Ravenel, Thierry Gérard Louis

(56) Documents cités:
- EP-A- 1 840 714
- WO-A-2004/046905
- WO-A-2006/007071
- WO-A-2006/028131
- US-A1- 2005 126 831
- US-A1- 2006 001 655

## Description

La présente invention concerne un écran à zones tactiles capacitives. Plus précisément, l'invention concerne un écran tactile du type capacitif destiné, par exemple, à être agencé au-dessus d'un écran d'affichage et comprenant un premier et un second substrats disposés parallèlement et à distance l'un de l'autre et réalisés en un matériau diélectrique transparent, au moins la face du premier substrat qui est en regard du second substrat étant munie d'une série d'électrodes transparentes correspondant à des zones tactiles, les électrodes étant formées par une couche d'un matériau électriquement conducteur.

Des écrans à zones tactiles du type décrit ci-dessus sont couramment utilisés notamment en combinaison avec les écrans d'affichage de certains appareils électroniques portables tels que des téléphones et des montres à glace tactile. En disposant un écran à zones tactiles au-dessus de l'écran d'affichage, il est possible de commander diverses fonctions électroniques de l'appareil portable associé.

Les écrans à zones tactiles capacitives fonctionnent selon le principe de la variation de la capacité que l'on observe lorsque l'utilisateur approche son doigt de l'électrode souhaitée. Cette capacité est notamment inversement proportionnelle à la distance qui sépare une électrode considérée dont l'intersection avec une contre-électrode correspondante définit la zone tactile. Il est donc crucial de pouvoir contrôler cette distance avec la plus grande précision afin que l'électronique de commande de l'appareil portable puisse convenablement interpréter la variation de capacité comme correspondant à l'introduction d'une commande.

Un autre problème des écrans à zones tactiles réside dans le fait que les électrodes, bien que réalisées en un matériau transparent, restent toujours au moins partiellement visibles, notamment en raison des reflets de la lumière ambiante sur l'écran tactile. Ces reflets nuisent à l'aspect général de l'appareil et peuvent gêner la lisibilité des informations affichées sur l'écran d'affichage de l'appareil.

Le document WO 2006/007071 décrit un capteur tactile du type capacitif comprenant un substrat transparent isolant sur lequel sont successivement déposés: un film conducteur transparent, une couche isolante non-réfléchissante, une couche adhésive transparente et un substrat de surface transparent. Ce document ne décrit pas un capteur tactile du type capacitif dont le substrat transparent isolant et le substrat de surface transparent sont réunis entre eux de manière rigide par un cadre de scellement.

Le document WO 2006/028131 décrit un panneau tactile de type capacitif comprenant deux éléments plans transparents sur les faces en regard desquels sont structurées des électrodes de lignes. Les deux éléments plans sont réunis au moyen d'une couche isolante prise en sandwich entre ces deux éléments. Par ailleurs, le document WO 2006/028131 décrit un panneau tactile de type capacitif comprenant un film polariseur, une première couche adhésive, un premier élément plan transparent, un film conducteur transparent, un second élément plan transparent, une seconde couche adhésive, un support, une troisième couche adhésive et une lame quart d'onde. Ce document ne décrit pas un panneau tactile de type capacitif dont les premier et second éléments plans transparents sont réunis entre eux de manière rigide par un cadre de scellement.

Le document US 2006/001655 décrit un panneau tactile comprenant deux substrats supérieur et inférieur sur les faces en regard desquels sont structurées respectivement des électrodes supérieures et des électrodes inférieures. Les substrats supérieur et inférieur sont assemblés l'un à l'autre à leur périphérie par un cadre de scellement. Lorsque l'utilisateur touche le panneau tactile, le substrat supérieur plie de sorte que celles des électrodes supérieures qui correspondent à la zone où l'utilisateur appuie viennent en contact avec les électrodes inférieures correspondantes. Par conséquent, ce document décrit un panneau tactile dont les substrats sont réunis par un cadre de scellement mais qui est flexible et non rigide.

Le document EP 1840714 décrit une cellule tactile et d'effort comprenant des premier et second substrats sur les faces en regard desquels sont structurées des pistes conductrices et qui sont séparés par un volume. Dans un mode de réalisation, le volume peut être clos pour permettre le remplissage de l'espace entre les premier et second substrats au moyen d'un liquide. Toutefois, le volume renferme une pluralité d'éléments compressibles qui permettent aux substrats de se rapprocher l'un de l'autre quand l'utilisateur appuie sur la cellule. Par conséquent, le document EP 1840714 décrit bien une cellule tactile dont les substrats sont réunis par un cadre de scellement mais cette cellule est flexible et non rigide.

Le document WO 2004/046905 décrit un écran tactile comprenant des substrats transparents supérieur et inférieur réunis par un cadre de scellement qui délimite un volume pour le confinement d'un cristal liquide. Quand un effort est exercé sur le substrat supérieur, la distance entre les substrats supérieur et inférieur change. Par conséquent, bien que ses substrats soient réunis par un cadre de scellement, l'écran tactile décrit est flexible et non rigide.

La présente invention a pour but de remédier aux problèmes susmentionnés ainsi qu'à d'autres encore en procurant un écran à zones tactiles capacitives dont l'interprétation des signaux de commande par une électronique associée n'engendre pas d'erreur ou de dysfonctionnement. La présente invention procure également un écran tactile capacitif dont les électrodes ne sont pas ou pratiquement pas visibles par l'utilisateur.

A cet effet, la présente invention concerne un écran tactile du type capacitif comportant un premier et un second substrats s'étendant parallèlement et à distance l'un de l'autre, ces premier et second substrats étant réalisés en un matériau diélectrique transparent, une première série d'électrodes réalisées en un matériau transparent et électriquement conducteur étant ménagée au moins sur la face du premier substrat qui est en regard du second substrat, cet écran tactile étant caractérisé en ce que les premier et second substrats sont réunis entre eux de manière rigide au moyen d'un cadre de scellement qui s'étend le long du périmètre extérieur de ces deux substrats pour maintenir constant l'espacement entre les deux substrats.

Grâce à ces caractéristiques, la présente invention procure un écran à zones tactiles capacitives comprenant un cadre de scellement qui permet de garantir un parallélisme constant entre les premier et second substrats. Le risque que l'électronique de commande de l'objet portable associé à un écran tactile selon l'invention interprète de manière erronée la mesure de la variation de la capacité associée à une zone tactile, par exemple parce que l'utilisateur appuie trop fortement sur l'écran et qu'il modifie ainsi l'écartement entre les deux substrats, est évité.

Selon une caractéristique complémentaire de l'invention, une seconde série d'électrodes réalisées en un matériau électriquement conducteur et transparent est ménagée sur la face du second substrat qui est en regard du premier substrat.

On comprendra que la présente invention s'applique de manière identique aux écrans à zones tactiles capacitives de type digital comme aux écrans à zones tactiles capacitives de type analogique.

Selon une première variante de réalisation de l'invention, les premier et second substrats sont réunis entre eux au moyen du cadre de scellement qui s'étend le long du périmètre extérieur de ces deux substrats et qui définit un volume pour le confinement d'un fluide dont l'indice de réfraction optique est sensiblement égal à celui du premier substrat.

Le cadre de scellement permet de réunir les premier et second substrats de manière solide et fiable. Par ailleurs, on met à profit le volume délimité par le cadre de scellement pour le remplir au moyen d'un fluide transparent isotrope ou anisotrope dont l'indice de réfraction optique est sensiblement égal à celui du premier substrat, ce qui permet de compenser optiquement la présence des électrodes par une homogénéisation de l'indice de réfraction dans la couche située à l'interface avec le premier substrat et de rendre ces électrodes pratiquement invisibles à l'oeil nu.

A titre d'exemple, le fluide qui remplit le volume de confinement délimité par le cadre de scellement peut être un cristal liquide. Etant donné que ce cristal liquide sert uniquement de liquide de remplissage et que l'on ne s'intéresse pas à ses propriétés optiques hormis son indice de réfraction optique, on peut choisir un cristal liquide bon marché.

Selon une caractéristique complémentaire de l'invention, on disperse des espaceurs dans le volume délimité par le cadre de scellement.

Grâce à cette autre caractéristique, les premier et second substrats sont non seulement maintenus solidement entre eux par le cadre de scellement le long de leur pourtour extérieur, mais la présence des espaceurs permet également une liaison très rigide des substrats de même qu'un excellent contrôle de leur écartement. Les substrats sont donc dans l'impossibilité de se rapprocher l'un de l'autre vers l'intérieur de leur surface. Ainsi, le premier substrat ne peut fléchir lorsque l'utilisateur appuie son doigt sur une zone tactile, de sorte que l'espacement entre les deux substrats reste constant quelles que soient les conditions d'utilisation et que la mesure de la variation de la capacité associée à une zone tactile par l'électronique de commande ne peut être faussée.

Selon une caractéristique complémentaire de l'invention, la ou les deux séries d'électrodes réalisées sur les faces en regard des premier et second substrats peuvent être recouvertes d'une couche d'un matériau diélectrique transparent dont l'indice de réfraction optique est idéalement compris entre l'indice de réfraction optique du premier substrat et l'indice de réfraction optique du matériau électriquement conducteur dans lequel sont réalisées les électrodes pour améliorer encore davantage la compensation optique.

D'autres caractéristique et avantages de la présente invention ressortiront plus clairement de la description détaillée qui suit de plusieurs exemples de réalisation d'un écran à zones tactiles capacitives selon l'invention, ces exemples étant donnés à titre purement illustratif et non limitatif seulement en liaison avec le dessin annexé sur lequel :
- la figure 1 est une vue en coupe d'un premier exemple de réalisation d'un écran à zones tactiles capacitives selon l'invention, les substrats avant et arrière étant réunis entre eux au moyen d'un cadre de scellement ;
- la figure 2 est une vue analogue à celle de la figure 1, les électrodes qui sont structurées sur la face du substrat avant qui est en regard du substrat arrière étant recouvertes d'une couche d'un matériau diélectrique transparent et l'espace délimité par le cadre de scellement étant rempli de cristal liquide avec dispersion d'espaceurs dans ce cristal liquide ;
- la figure 3 est une vue analogue à celle de la figure 2, une seconde série d'électrodes étant structurée sur la face du second substrat en regard du premier substrat et recouvertes d'une couche d'un matériau diélectrique transparent, et
- la figure 4 est une vue en coupe d'un écran à zones tactiles capacitives de type analogique dont les substrats avant et arrière sont réunis entre eux au moyen d'une couche adhésive de colle optique dans laquelle sont dispersés des espaceurs.

La présente invention procède de l'idée générale inventive qui consiste à procurer un écran à zones tactiles capacitives défini par deux substrats avant et arrière dont l'un au moins porte une série d'électrodes et dont l'espacement est contrôlé avec précision de manière à ne pas engendrer d'erreur sur la mesure de la capacité d'une zone tactile. L'invention vise également à procurer un tel écran tactile à zones capacitives dont la présence desdites zones est compensée optiquement de manière à rendre ces zones invisibles à l'oeil nu.

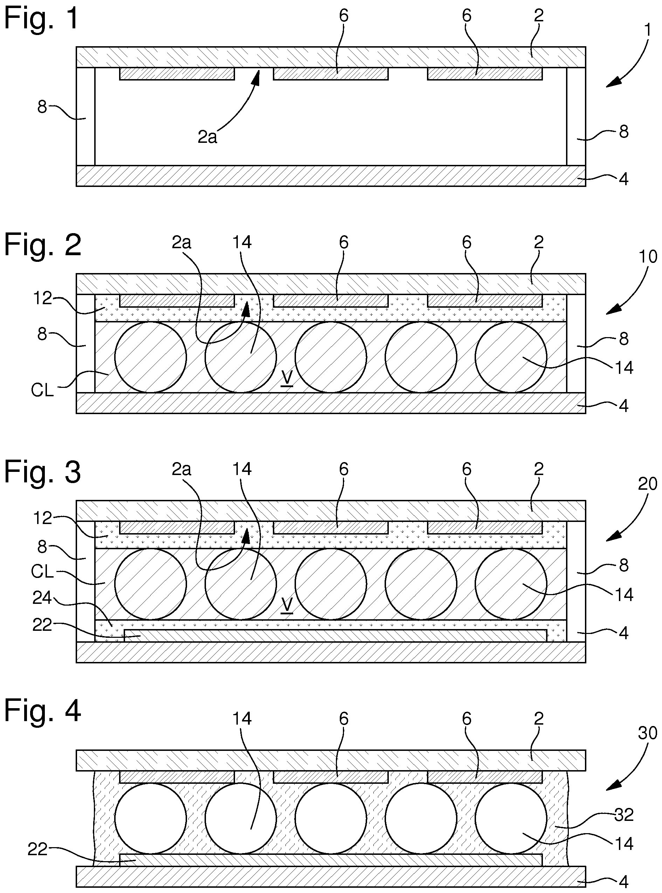

Un premier exemple de réalisation d'un écran à zones tactiles capacitives selon l'invention est représenté à la figure 1. Désigné dans son ensemble par la référence numérique générale 1, cet écran tactile comprend un premier et un second substrats respectivement 2 et 4 qui s'étendent parallèlement et à distance l'un de l'autre. Une série d'électrodes 6 réalisées en un matériau électriquement conducteur et transparent est structurée par toute technique appropriée sur la face 2a du premier substrat 2 qui est en regard du second substrat 4. Conformément à l'invention, les premier et second substrats 2, 4 sont solidarisés entre eux au moyen d'un cadre de scellement 8. Ce cadre de scellement 8, réalisé par toute technique appropriée telle que la sérigraphie, suit le pourtour extérieur des premier et second substrats 2, 4. La hauteur du cadre de scellement 8 peut être contrôlée avec une grande précision, il permet de maintenir constant l'espacement entre lesdits premier et second substrats 2, 4.

Dans tout ce qui suit, les éléments identiques à ceux décrits en liaison avec la figure 1 seront désignés par les mêmes références numériques.

Un second mode de réalisation d'un écran à zones tactiles capacitif est représenté en liaison avec la figure 2. Désigné dans son ensemble par la référence numérique générale 10, il comprend un premier et un second substrats 2 et 4 qui s'étendent parallèlement et à distance l'un de l'autre. Le premier substrat 2 porte sur sa face 2a en regard du second substrat 4 une série d'électrodes 6.

Le mode de réalisation de l'écran à zones tactiles représenté à la figure 2 se distingue de celui représenté à la figure 1 en ce qu'une couche intermédiaire 12 réalisée en un matériau diélectrique transparent est agencée sur la face 2a du premier substrat 2 de manière à recouvrir les électrodes 6. Cette couche intermédiaire 12 a pour but de compenser optiquement la présence des électrodes 6 en homogénéisant l'indice de réfraction dans la couche située à l'interface 2a avec le premier substrat 2 de manière à rendre les électrodes invisibles à l'oeil nu.

L'autre différence avec le mode de réalisation représenté à la figure 1 réside dans le fait que le volume de confinement V délimité par le cadre de scellement 8 est rempli avec un liquide isotrope ou anisotrope CL dans lequel sont dispersés des espaceurs 14.

Le liquide de remplissage CL peut être un cristal liquide dont l'indice de réfraction optique est égal ou proche de celui du premier substrat 2. Il a pour seule fonction d'améliorer encore davantage la compensation optique qui permet de rendre invisibles les électrodes 6. Par conséquent, exception faite de son indice de réfraction optique, on n'utilise pas le cristal liquide CL pour ses propriétés optiques, de sorte qu'un cristal liquide bon marché pourra être utilisé. Afin d'éviter la formation de domaines dans le volume de cristal liquide, on pourra frotter la couche intermédiaire 12 en contact avec le cristal liquide CL. On notera également qu'avec l'utilisation d'un cristal liquide, on est assuré de la compatibilité chimique de ce cristal liquide avec les autres matériaux constituant un écran tactile selon l'invention. Néanmoins, on comprendra que n'importe quel liquide transparent tel qu'une huile silicone compatible chimiquement avec les autres matériaux entrant dans la constitution d'un écran tactile selon l'invention peut être utilisé.

Les espaceurs 14 sont des billes ou des portions de cylindre dont les caractéristiques géométriques sont parfaitement contrôlées. Dispersés dans le liquide de remplissage CL, les espaceurs 14 permettent d'améliorer encore davantage le contrôle de l'espacement entre les premier et second substrats 2, 4 et la rigidité de l'écran tactile 10 ainsi obtenu. En particulier, les risques que le premier substrat 2 fléchisse lorsque l'utilisateur pose son doigt sur lui et que la mesure de la variation de capacité de la zone ainsi activée soit faussée sont écartés.

L'écran à zones tactiles capacitives 20 représenté à la figure 3 diffère de celui représenté à la figure 2 en ce qu'une seconde série d'électrodes 22 réalisées en un matériau transparent et électriquement conducteur est structurée par toute technique appropriée sur la face 4a du second substrat 4 qui est en regard du premier substrat 2. Les deux groupes d'électrodes 6 et 22 sont typiquement disposées selon un agencement matriciel, les électrodes du groupe d'électrodes 22 formant les lignes tandis que les électrodes du groupe d'électrodes 6 forment les colonnes. On mesure la variation de la capacité au point considéré où l'utilisateur pose son doigt entre une électrode portée par le premier substrat 2 et l'électrode correspondante portée par le second substrat 4. Un tel écran tactile 20 est habituellement appelé écran à zones tactiles capacitives du type analogique par opposition à un écran tactile ne comprenant qu'une série d'électrodes sur la face inférieure du substrat supérieur qui définissent des zones ponctuelles bien déterminées correspondant à l'endroit où l'utilisateur doit appliquer son doigt. Un tel écran est lui habituellement appelé écran à zones tactiles capacitives du type digital. On notera qu'il existe également des écrans à touches tactiles capacitives de type digital dont les zones sensibles sont déterminées par l'intersection de deux électrodes considérées portées respectivement par chacune des deux faces en regard des substrats.

On remarquera que la seconde série d'électrodes 22 est également recouverte d'une couche intermédiaire 24 réalisée en un matériau diélectrique transparent et qui a pour but de compenser optiquement la présence des électrodes 22 afin que celles-ci ne soient pas perceptibles à l'oeil nu.

On remarquera également la présence d'espaceurs 14 qui, en combinaison avec le cadre de scellement 8, permettent de rigidifier l'écran tactile 20 et de maintenir un écartement parfaitement constant entre les premier et second substrats 2 et 4. Ainsi, la capacité Q qui correspond au produit entre la constante diélectrique ε du milieu qui sépare une électrode 6 de son électrode correspondante 22 et la surface S correspondant à l'intersection de ces deux électrodes 6.22, le tout divisé par la distance d séparant les deux électrodes 6,22 peut être maintenue constante et ne variera que lorsque l'utilisateur posera par exemple son doigt à la surface de l'écran 20. La détection de la variation de la capacité Q est donc exempte de toute possibilité d'erreur.

On notera que, dans le cas de l'écran à zones tactiles capacitives 20 du type analogique décrit ci-dessus, il est possible de reporter les électrodes 6 formant les colonnes et portées par le premier substrat 2 au niveau des électrodes 22 formant les lignes et portées par le second substrat 4. Ce report peut être opéré par exemple au moyen d'une colle chargée de billes métalliques (technique mieux connue sous son expression anglo-saxonne « contact in seal ») ou au moyen d'une colle argent formant des points de contact. En réalisant un tel report, on peut faire sortir les électrodes de ligne et les électrodes de colonne le long d'un seul côté de l'écran d'affichage, ce qui permet de réaliser un gain de place substantiel.

On voit à la figure 4 que les substrats avant 2 et arrière 4 sont réunis entre eux au moyen d'une couche adhésive 32 constituée de colle optique dans laquelle sont dispersés des espaceurs 14.

Il va de soi que la présente invention n'est pas limitée aux modes de réalisation qui viennent d'être décrits et que diverses variantes et modifications simples peuvent être envisagées par l'homme du métier sans sortir du cadre de l'invention tel que défini par les revendications annexés. En particulier, les matériaux suivants peuvent être utilisés pour la mise en oeuvre de l'invention :
- les électrodes 6, 22 peuvent être réalisées en oxyde d'étain et d'indium mieux connu sous son acronyme anglo-saxon ITO. Leur épaisseur est préférentiellement inférieure ou égale à 15 nanomètres ;
- les premier et second substrats 2, 4 sont réalisés dans un matériau transparent tel que du verre, du polymétacrylate de méthyle (PMMA) ou en polycarbonate (PC) ;
- les couches intermédiaires 12, 24 qui recouvrent les électrodes 6, 22 sont réalisées au moyen d'un matériau diélectrique transparent tel qu'un polyimide (PI) avec un indice de réfraction sensiblement égal à 1,68, c'est-à-dire avec un indice compris entre l'indice de réfraction optique des substrats 2, 4 et l'indice de réfraction optique de l'ITO. L'épaisseur de la couche de polyimide est préférentiellement supérieure ou égale à 70 nanomètres ;
- la colle optique de la couche adhésive 32 est choisie avec un indice de réfraction compris entre 1,45 et 1,55, c'est-à-dire voisin à quelques centièmes près de l'indice de réfraction optique des substrats 2, 4 qui est ici sensiblement égal à 1,5.

On notera que la présente invention permet de garantir l'épaisseur de la couche diélectrique séparant les électrodes à +/- 0,1 µm. Ainsi par exemple, pour un intervalle entre les électrodes de 9 micromètres, les fluctuations observées sont de l'ordre de 1 à 2% au maximum.

## Revendications

1. Ecran tactile du type capacitif comportant un premier et un second substrats (2, 4) s'étendant parallèlement et à distance l'un de l'autre, ces premier et second substrats (2, 4) étant réalisés en un matériau diélectrique transparent, une première série d'électrodes (6) réalisées en un matériau transparent et électriquement conducteur étant ménagée au moins sur la face (2a) du premier substrat (2) qui est en regard du second substrat (4), cet écran tactile étant **caractérisé en ce que** les premier et second substrats (2, 4) sont réunis entre eux de manière rigide au moyen d'un cadre de scellement (8) qui s'étend le long du périmètre extérieur de ces deux substrats (2, 4) pour maintenir constant l'espacement entre les deux substrats (2, 4).

2. Ecran tactile selon la revendication 1, **caractérisé en ce qu'**une seconde série d'électrodes (22) réalisées en un matériau électriquement conducteur et transparent est ménagée sur la face du second substrat (4) qui est en regard du premier substrat (2).

3. Ecran tactile selon l'une quelconque des revendications 1 ou 2, **caractérisé en ce que** le cadre de scellement (8) définit un volume (V) pour le confinement d'un fluide (CL) dont l'indice de réfraction optique est sensiblement égal à celui du premier substrat (2).

4. Ecran tactile selon la revendication 2 ou la revendication 3 en ce qu'elle dépend de la revendication 2, **caractérisé en ce que** la première série d'électrodes (6) structurée sur la face (2a) du premier substrat (2) qui est disposé du côté où l'utilisateur introduit la commande est reportée au niveau de la seconde série d'électrodes (22).

5. Ecran tactile selon l'une quelconque des revendications 3 ou 4, **caractérisé en ce que** des espaceurs (14) sont dispersés dans le volume (V) délimité par le cadre de scellement (8).

6. Ecran tactile selon l'une quelconque des revendications 3 à 5, **caractérisé en ce que** le fluide (CL) confiné dans le volume délimité par le cadre de scellement (8) est un cristal liquide ou un fluide transparent isotrope ou anisotrope dont l'indice de réfraction optique est sensiblement égal à celui du premier substrat (4).

7. Ecran tactile selon l'une quelconque des revendications 1 à 3, **caractérisé en ce qu'**une couche intermédiaire (12, 24) réalisée en un matériau diélectrique transparent est agencée sur la face de l'un au moins des premier et second substrats (2, 4) qui porte la première, respectivement la seconde série d'électrodes (6, 22), de manière à recouvrir ces électrodes (6, 22).

8. Ecran tactile selon la revendication 7, **caractérisé en ce que** la couche intermédiaire (12, 24) de matériau diélectrique transparent possède un indice de réfraction optique compris entre l'indice de réfraction optique du premier substrat (4) et l'indice de réfraction optique du matériau électriquement conducteur dans lequel sont réalisées les électrodes (6, 22).

9. Ecran tactile selon la revendication 8, **caractérisé en ce que** la couche intermédiaire (12, 24) de matériau diélectrique transparent est réalisée en un polyimide d'indice de réfraction optique sensiblement égal à 1,68.

10. Ecran tactile selon l'une quelconque des revendications 1 à 9, **caractérisé en ce que** l'épaisseur des électrodes (6, 22) est inférieure ou égale à quinze nanomètres.

11. Ecran tactile selon la revendication 10, **caractérisé en ce que** les électrodes (6, 22) sont réalisées en oxyde d'étain et d'indium.

## Patentansprüche

1. Touchscreen des kapazitiven Typs, umfassend ein erstes und ein zweites Substrat (2, 4), die sich parallel und in einem gegenseitigen Abstand erstrecken, wobei das erste und das zweite Substrat (2, 4) aus einem lichtdurchlässigen dielektrischen Material hergestellt sind, wobei eine erste Reihe von Elektroden (6), die aus einem lichtdurchlässigen und elektrisch leitenden Material hergestellt sind, zumindest in jener Fläche (2a) des ersten Substrats (2) ausgebildet sind, die sich gegenüber dem zweiten Substrat (4) befindet, wobei dieser Touchscreen **dadurch gekennzeichnet ist, dass** das erste und das zweite Substrat (2, 4) mittels eines Dichtungsrahmen (8), der sich längs des äußeren Umfangs dieser beiden Substrate (2, 4) erstreckt, starr miteinander zusammengefasst sind, um den Abstand zwischen den beiden Substraten (2, 4) konstant zu halten.

2. Touchscreen nach Anspruch 1, **dadurch gekennzeichnet, dass** eine zweite Reihe von Elektroden (22), die aus einem elektrisch leitenden und lichtdurchlässigen Material hergestellt sind, in jener Fläche des zweiten Substrats (4) ausgebildet ist, die sich gegenüber dem ersten Substrat (2) befindet.

3. Touchscreen nach einem der Ansprüche 1 oder 2, **dadurch gekennzeichnet, dass** der Dichtungsrahmen (8) ein Volumen (V) für den Einschluss eines Fluids (CL) definiert, dessen optischer Brechungsindex im Wesentlichen gleich jenem des ersten Substrats (2) ist.

4. Touchscreen nach Anspruch 2 oder nach Anspruch 3, wenn abhängig von Anspruch 2, **dadurch gekennzeichnet, dass** die erste Reihe von Elektroden (6), die auf jener Fläche (2a) des ersten Substrats (2) strukturiert ist, die auf der Seite angeordnet ist, auf der der Anwender Befehle eingibt, auf die Höhe der zweiten Reihe von Elektroden (22) verschoben ist.

5. Touchscreen nach einem der Ansprüche 3 oder 4, **dadurch gekennzeichnet, dass** in dem Volumen (V), das durch den Dichtungsrahmen (8) begrenzt ist, Abstandshalter (14) verteilt sind.

6. Touchscreen nach einem der Ansprüche 3 bis 5, **dadurch gekennzeichnet, dass** das Fluid (CL), das in dem durch den Dichtungsrahmen (8) begrenzten Volumen eingeschlossen ist, ein Flüssigkristall oder ein isotropes oder anisotropes lichtdurchlässiges Fluid ist, dessen optischer Brechungsindex im Wesentlichen gleich jenem des ersten Substrats (4) ist.

7. Touchscreen nach einem der Ansprüche 1 bis 3, **dadurch gekennzeichnet, dass** eine Zwischenschicht (12, 24), die aus einem lichtdurchlässigen dielektrischen Material hergestellt ist, auf den Flächen des ersten und/oder des zweiten Substrats (2, 4), die die erste oder entsprechend die zweite Reihe von Elektroden (6, 22) tragen, in einer Weise angeordnet ist, dass diese Elektroden (6, 22) bedeckt sind.

8. Touchscreen nach Anspruch 7, **dadurch gekennzeichnet, dass** die Zwischenschicht (12, 24) aus lichtdurchlässigem dielektrischem Material einen optischen Brechungsindex einbegriffen im Bereich zwischen dem optischen Brechungsindex des ersten Substrats (4) und dem optischen Brechungsindex des elektrisch leitenden Materials, aus dem die Elektroden (6, 22) hergestellt sind, besitzt.

9. Touchscreen nach Anspruch 8, **dadurch gekennzeichnet, dass** die Zwischenschicht (12, 24) aus einem lichtdurchlässigen dielektrischen Material aus einem Polyimid mit einem optischen Brechungsindex, der im Wesentlichen gleich 1,68 ist, hergestellt ist.

10. Touchscreen nach einem der Ansprüche 1 bis 9, **dadurch gekennzeichnet, dass** die Dicke der Elektroden (6, 22) kleiner oder gleich fünfzehn Nanometer ist.

11. Touchscreen nach Anspruch 10, **dadurch gekennzeichnet, dass** die Elektroden (6, 22) aus Zinn- und Indiumoxid hergestellt sind.

## Claims

1. Capacitive touch screen including first and second substrates (2, 4) extending parallel to and at a distance from each other, said first and second substrates (2, 4) being made of a transparent, dielectric material, a first series of electrodes (6) made of a transparent, electrically conductive material being arranged on at least the surface (2a) of the first substrate (2) that faces the second substrate (4), said touch screen being **characterized in that** the first and second substrate (2, 4) are rigidly joined to each other by means of a sealing frame (8) which extends along the outer perimeter of said two substrates (2, 4) for keeping the space between the two substrates (2, 4) constant.

2. Touch screen according to claim 1, **characterized in that** a second series of electrodes (22), made of a transparent, electrically conductive material, is arranged on the surface of the second substrate (4) that faces the first substrate (2).

3. Touch screen according to any of claims 1 or 2, **characterized in that** the sealing frame (8) defines a volume (V) for the confinement of a fluid (CL) whose optical refractive index is substantially equal to that of the first substrate (2).

4. Touch screen according to claim 2 or to claim 3 when it depends from claim 2, **characterized in that** the first series of electrodes (6) which is structured on the surface (2a) of the first substrate (2) which is arranged on the side where the user introduces the command is transferred next to the second series of electrodes (22).

5. Touch screen according to any of claims 3 or 4, **characterized in that** spacers (14) are dispersed in the volume (V) delimited by the sealing frame (8).

6. Touch screen according to any of claims 3 to 5, **characterized in that** the fluid (CL) confined in the volume delimited by the sealing frame (8) is a liquid crystal or a transparent, isotropic or anisotropic fluid, whose optical refractive index is substantially equal to that of the first substrate (2).

7. Touch screen according to any of claims 1 to 3, **characterized in that** an intermediate layer (12, 24), made of a transparent, dielectric material, is arranged on the surface of at least one of the first and second substrates (2, 4), which carries the first, respectively the second, series of electrodes (6, 22) so as to cover said electrodes (6, 22).

8. Touch screen according to claim 7, **characterized in that** the intermediate layer (12, 24) of transparent, dielectric material has an optical refractive index comprised between the optical refractive index of the first substrate (2) and the optical refractive index of the electrically conductive material of which the electrodes (6, 22) are made.

9. Touch screen according to claim 8, **characterized in that** the intermediate layer (12, 24) of transparent, dielectric material is made of a polyimide with an optical refractive index that is substantially equal to 1.68.

10. Touch screen according to any of claims 1 to 9, **characterized in that** the thickness of the electrodes (6, 22) is less than or equal to fifteen nanometres.

11. Touch screen according to claim 10, **characterized in that** the electrodes (6, 22) are made of indium and tin oxide.
